Europäisches Patentamt

European Patent Office

Office européen des brevets

(11) Veröffentlichungsnummer: **0 476 160 A1**

# EUROPÄISCHE PATENTANMELDUNG

(21) Anmeldenummer: **90117820.2**

(22) Anmeldetag: **15.09.90**

(51) Int. Cl.5: **G06F 11/16**, G05B 9/00

(43) Veröffentlichungstag der Anmeldung:
**25.03.92 Patentblatt 92/13**

(84) Benannte Vertragsstaaten:
**AT BE CH DE ES FR GB GR IT LI LU NL SE**

(71) Anmelder: **Bodenseewerk Gerätetechnik GmbH
Alte Nussdorfer Strasse 15 Postfach 1120
W-7770 Überlingen/Bodensee(DE)**

(72) Erfinder: **Krogmann, Uwe
Zur Asche 24
W-7770 Überlingen/Nussdorf(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

(54) Einrichtung zur Erzeugung von Messsignalen mit einer Mehrzahl von redundant vorgesehenen Sensoren.

(57) Zur Erzeugung von Meßsignalen dient eine Anzahl von redundant vorgesehenen Sensoren, deren Sensorsignale in einem vorgegebenen Takt abgetastet und digitalisiert und durch ebenfalls redundant vorgesehene Rechner (34,36,38,40) mit mehrfach vorgesehener Software digital verarbeitet werden. Jeder der Rechner (34,36,38,40) verarbeitet die Sensorsignale mit einem Hauptprogramm (N) und paravlolnel dazu mit einem dem Hauptprogramm (N) verschiedenen Überwachungsprogramm (M). Ein erster Rechner (34) ist eingerichtet, in jedem Rechentakt (n) Sensorsignale zu verarbeiten, die in einem vorgegebenen Abtasttakt (n) bezogen auf den Rechentakt (n) abgetastet werden. Weitere Rechner (36,38,40) verarbeiten jeder in jedem Rechentakt (n) Sensorsignale, welche in Abtasttakten ((n-1),(n-2), (n-3)) abgetastet wurden, die gegenüber dem besagten vorgegebenen Abtasttakt (n) unterschiedliche Nacheilungen aufweisen. Eine Fehlerlogik dient zur Entscheidungsfindung über Programmfehler aus den mit dem Hauptprogramm (N) und dem Überwachungsprogramm (M) in den verschiedenen Rechnentakten erhaltenen Ausgangsdaten.

EP 0 476 160 A1

Fig.1

## Technisches Gebiet

Die Erfindung betrifft eine Einrichtung zur Erzeugung von Meßsignalen mit einer Mehrzahl von redundant vorgesehenen Sensoren, deren Sensorsignale in einem vorgegebenen Abtastakt abgetastet und digitalisiert und durch ebenfalls redundant vorgesehene Rechner mit mehrfach vorgesehener Software digital verarbeitet werden.

## Zugrundeliegender Stand der Technik

Bei manchen Regler, beispielsweise bei Flugreglern oder Reglern an Kernkraftwerken, kann der Ausfall eines Sensors oder eines signalverarbeitenden Rechners schwerwiegende Folgen haben. Es wird in solchen Fällen gefordert, daß die Regelung auch nach Ausfall eines oder mehrerer Bauteile noch funktioniert. Eine Funktionsunfähigkeit nach Ausfall mehrerer Bauteile soll wenigstens durch ein Fehlersignal angezeigt werden. Der Regler oder eine sonstige Meß- und Signalverarbeitungseinrichtung soll "fehlertolerant" sein.

Hinsichtlich eines Ausfalls oder einer unzulässigen Verschlechterung der "Hardware" wird diese Fehlertoleranz dadurch erreicht, daß die Sensoren und die signalverarbeitenden Rechner mehrfach redundant vorgesehen werden. Ein geeignetes "Redundanzmanagement" sorgt dann dafür, daß fehlerhafte Bauteile erkannt und für die Bildung des Meßsignals ausgeschaltet werden. Im einfachsten Fall kann beispielsweise bei Verwendung von drei Sensoren zur Messung ein und derselben Meßgröße ein Redundanzmanagement durch eine Mehrheitsbetrachtung stattfinden: Wenn von den drei Meßwerten zwei Meßwerte innerhalb vorgegebener Toleranzen übereinstimmen und der dritte deutlich von dem Mittelwert der beiden anderen abweicht, dann kann man davon ausgehen, daß der dritte Sensor defekt ist.

Nun spielt aber bei der Signalverarbeitung nicht nur die Hardware eine Rolle sondern auch die "Software", also die Programmierung signalverarbeitender Rechner. Auch die Software kann Fehler zeigen. Zwischen Hardwarefehlern und Softwarefehlern besteht aber ein grundsätzlicher Unterschied. Hardwareausfälle, also Ausfall eines Bauteils, treten statistisch auf. Mann kann nicht vorhersagen, ob oder wann ein Bauteil ausfallen wird. Üblicherweise liefert die Ausfallwahrscheinlichkeit eine Exponentialkurve über der Zeit. Durch Vermehrfachung der Bauteile und Redundanzmanagement kann eine erhöhte Sicherheit erreicht werden. Software unterliegt keinem Verschleiß. Fehler sind latent von vornherein in der Software enthalten. Sie treten aber nur bei bestimmten Kombinationen von Eingangsgrößen und internen Zuständen in Erscheinung. Eine Vermehrfachung der Software nützt nichts: Wenn Eingangssignale durch die gleiche Software in drei verschiedenen Kanälen verarbeitet werden, dann treten die Fehler gleichzeitig in allen drei Kanälen auf.

Es ist praktisch nicht möglich, die Software für alle denkbaren Kombinationen von Eingangssignalen und internen Zuständen zu testen. Für einen solchen Test wären selbst bei schnellsten Rechnern untragbar lange Zeiten erforderlich.

Um Softwarefehler bei kritischen Systemen wie Flugreglern zu erkennen, werden nach dem Stand der Technik Programme zur Durchführung einer bestimmten Signalverarbeitung mehrfach von verschiedenen Programmierern in unterschiedlichen Programmiersprachen programmiert. Die Signalverarbeitung wird dann einmal mit einem ersten, einmal mit einem zweiten und ggf. einmal mit einem dritten Programm durchgeführt. Es ist unwahrscheinlich, daß unter diesen Umständen ein Programmierfehler gleichzeitig in allen drei oder mehr Programmen auftritt. Diese unterschiedlichen Programme zur Durchführung der gleichen Signalverarbeitung wird als "dissimilare Software" bezeichnet. Eine mit drei oder mehr dissimilaren Programmen arbeitende Architektur ist beschrieben in einem Aufsatz von Fischler und Firschein "A Fault Tolerant Multiprocessor Architecture for Real-Time Control Applications" in "Proceedings of the Annual Symposium on Computer Architecture" University of Florida 2.- 11 Dezember 1973, New York, 115-157.

Diese Mehrfachprogrammierung ist sehr aufwendig. Das gilt insbesondere, wenn das System mehrere auftretende Fehler tolerieren soll, entsprechend z.B. einem Sicherheitsstandard "fail-operational, fail-operational, fail safe".

Eine andere Lösung besteht darin, in jedem von mehreren Kanälen zwei Sätze von dissimilarer Software zu installieren, wobei die für die verschiedenen Kanäle verwendeten Paare von Softwaresätzen untereinander wieder gleich sind. Es sind dann nur zwei Programme zu erstellen. In jedem Kanal ist aber ein Satz von Software durch einen in dem Kanal eingebauten zweiten Satz von Software gestützt. Die Vermehrfachung der Kanäle bringt aber keine zusätzliche Sicherheit, da Softwarefehler, wie oben erläutert, in allen Kanälen gleichzeitig auftreten. Es ergibt sich somit für die Software nach wie vor nur eine zweifache Redundanz.

Durch die CH-A-640 959 und die DE-C- 30 37 150 ist eine Datenverarbeitungseinrichtung mit drei Kanälen bekannt, bei denen Eingangsdaten in drei parallelen Rechnern nach einem Programm verarbeitet werden. Die Rechner arbeiten zeitverschoben gegeneinander mit übereinstimmenden Daten, d.h. der gleiche Programmschritt wird in den verschiedenen Reglern zu unterschiedlichen Zeitpunkten ausgeführt. Nach einem Programmabschnitt werden die Ergebnissse zwischengespeichert. Wenn alle Ergebnisse in dem Zwischenspeicher vorliegen, erfolgt eine Mehrheitsbetrachtung zur Eliminierung gestörter Ergebnisse. Der Rechenablauf geht dabei weiter, auch wenn das eine Ergebnis noch im Zwischenspeicher auf das andere warten muß.

Durch dieses zeitverschobene Arbeiten von Programmen kann der Einfluß von äußeren Störungen eliminiert werden. Eine solche äußere Störung, z.B. eine Spannungsspitze, tritt dann in den verschiedenen Programmen bei unterschiedlichen Programmschritten auf. Wenn dadurch das Ergebnis verfälscht wird, dann kann das bei der Mehrheitsbetrachtung festgestellt werden. Würden die Programme zeitparallel ablaufen, dann könnte sich eine solche äußere Störung in allen drei Programmen gleich auswirken und würde durch die Mehrheitsbetrachtung nicht bemerkt. Wenn aber ein Fehler in dem Programm vorliegt, dann wird dieser Fehler zeitverzögert in allen drei Rechnern mit den gleichen Eingangsdaten begangen. Der Zwischenspeicher erhielte zeitverzögert drei falsche Ergebnisse, die nach eingang des letzten dieser Ergebnisse bei der Mehrheitsbetrachtung als "richtig" identifiziert würden.

## Offenbarung der Erfindung

Der Erfindung liegt die Aufgabe zugrunde, bei einer Einrichtung der eingangs definierten Art eine hohe Fehlertoleranz der Software mit einem Minimum an Programmieraufwand zu erreichen.

Erfindungsgemäß wird diese Aufgabe dadurch gelöst, daß

(a) jeder der Rechner die Sensorsignale mit einem Hauptprogramm und parallel dazu mit einem von dem Hauptprogramm verschiedenen Überwachungsprogramm verarbeitet,

(b) ein erster Rechner eingerichtet ist, in jedem Rechentakt Sensorsignale zu verarbeiten, die in einem vorgegebenen Abtasttakt bezogen auf den Rechentakt abgetastet werden,

(c) weitere Rechner vorgesehen sind, die jeder in jedem Rechentakt Sensorsignale verarbeiten, welche in Abtasttakten abgetastet wurden, die gegenüber dem besagten vorgegebenen Abtasttakt unterschiedliche Nacheilungen aufweisen, und

(d) eine Fehlerlogik zur Entscheidungsfindung über Programmfehler aus den mit dem Hauptprogramm und dem Überwachungsprogramm von den verschiedenen Rechnern erhaltenen Ergebnissen vorgesehen ist.

Softwarefehler werden durch bestimmte Sätze von Eingangsdaten in Verbindung mit dem internen Zustand ausgelöst.

Die Erfindung vermeidet das Auftreten gleicher Sätze von Eingangsdaten an den verschiedenen Rechnern, indem eine "zeitliche Trennung" erfolgt: Die weiteren Rechner verarbeiten jeweils Eingangsdaten aus Sensorsignalen, die dem in dem ersten Rechner verarbeiteten Satz von Eingangsdaten zeitlich um unterschiedliche, z.B. einen, zwei oder drei Abtasttakte nacheilen. Dadurch wird sichergestellt, daß nicht an allen Rechnern die gleichen Eingangsdaten anliegen, und nicht alle Rechner in den gleichen Zuständen sind.

Wenn das Hauptprogramm in dem vorgegebenen Abtast- und Rechentakt, als z.B. im Zeitpunkt nT, im ersten Rechner funktioniert, wobei T die Taktperiode ist, dann funktioniert das Programm auch in den weiteren Rechnern. Wenn diese Rechner die aus den Sensorsignalen gewonnenen Eingangsdaten z.B. von den Zeitpunkten $(n-1)T$, $(n-2)T$ und $(n-3)T$ verarbeiten, dann sind diese Eingangsdaten ja in vorangegangenen Rechentakten in dem ersten Rechner verarbeitet worden. Wenn daher das Hauptprogamm im Zeitpunkt nT funktioniert oder -anders formuliert- $N_n$ richtig arbeitet, wobei N das Hauptprogramm bezeichnet, dann funktioniert auch $N_{n-1}$, $N_{n-2}$ usw.

Durch das Überwachungsprogramm, das hier durch das Symbol M bezeichnet werden soll, wird überprüft, ob das Hauptprogramm im Zeitpunkt nT, also mit den im Abtasttakt n abgetasteten Sensorsignalen richtig arbeitet. Das kann man im einfachsten Fall unterstellen, wenn im Zeitpunkt nT beide Programme $N_n$ und $M_n$ gleiche Ergebnisse liefern.

Die weiteren Rechner liefern mit geprüfter Software die aus den Sensorsignalen abzuleitenden Meßsignale.

Vorteilhafterweise bildet die Fehlerlogik einmal die Differenz der Ergebnisse aus der Verararbeitung der von dem ersten Rechner mit dem Hauptprogramm und mit dem Überwachungsprogramm erhaltenen Ausgangsdaten. Dadurch wird die Übereinstimmung der mit Hauptprogramm und Überwachungsprogramm erhaltenen Ergebnisse geprüft. Bei Auftreten einer signifikanten Differenz vergleicht die Fehlerlogik die mit dem Hauptprogramm und dem Überwachungsprogramm durch den ersten Rechner erhaltenen Ergebnisse mit Vorhersagewerten, die aus den mit den weiteren Rechnern mit dem Hauptprogramm und dem Überwachungsprogramm erhaltenen Ergebnissen gebildet werden. Aus den Werten der berechneten Meßgröße in den Abtasttakten n-3, n-2 und n-1, die von den weiteren Rechnern berechnet werden, kann der Verlauf der Meßgröße auf den Zeitpunkt nT extrapoliert werden. Es kann davon ausgegangen werden, daß eine physikalische Meßgröße sich stetig und differenzierbar ändert. Es kann dann geprüft werden, welcher berechnete Wert, der mit dem Hauptprogamm oder der mit dem Überwachungsprogramm berechnete oder beide, von einem solchen Voraussagewert abweicht. Daraus kann ein Schluß auf den Status der Software gezogen werden.

Ausgestaltungen der Erfindung sind Gegenstand der weiteren Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt als Blockdiagramm den Aufbau einer Einrichtung zur Erzeugung von Meßsignalen aus einer Mehrzahl redundant vorgesehener Sensoren oder Sensormodule mit einer Merhzahl von Rechnern, die jeder eine Signalverarbeitung mit zwei Sätzen von unterschiedlicher Software durchführt.

Fig.2 zeigt eine Fehlerlogik zur Bestimmung des Softwarestatus, also zur Feststellung von Softwarefehlern, bei der Einrichtung nach Fig.1.

Fig.3 zeigt eine Entscheidungslogik, die in der Fehlerlogik von Fig.2 zur Bestimmung des Softwarestatus benutzt wird.

Fig.4 zeigt die zugehörige Wahrheitstabelle.

Fig.5 veranschaulicht die Rekonfiguration der Einrichtung bei feststellung von Softwarefehlern in Hauptprogramm und Überwachungsprogramm.

## Bevorzugte Ausführung der Erfindung

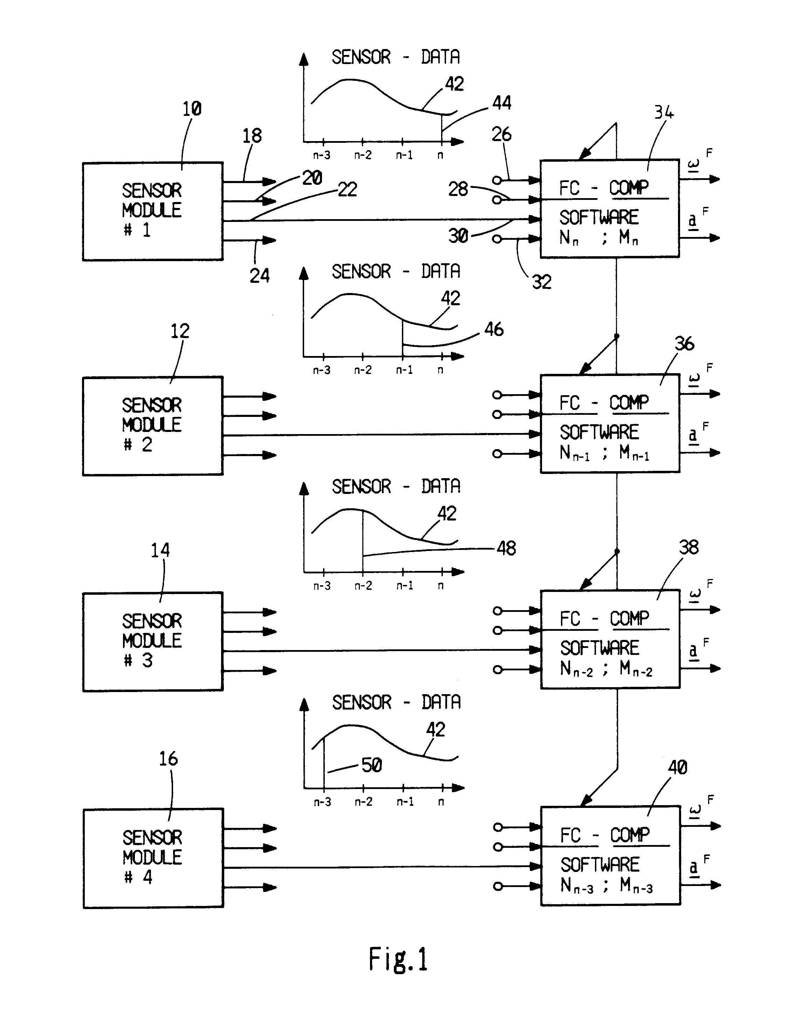

In Fig.1 ist als Einrichtung zur Erzeugung von Meßsignalen aus Sensorsignalen die Signalverarbeitung von Kreisel- und Beschleunigungsmesser-Signalen zu Winkelgeschwindigkeits-Signalen und Beschleunigungs-Signalen in einem Flugregler dargestellt, wobei die Winkelgeschwindigkeits-Signale und Beschleunigungs-Signale auf ein flugzeugfestes Bezugssystem bezogen sind. Mit 10, 12, 14 und 16 sind vier Sensormodule bezeichnet. Die Sensormodule 10, 12, 14 und 16 liefern je vier Kreisel- und Beschleunigungsmesser-Signale an je vier Ausgängen 18, 20, 22 und 24. Die vier Ausgänge 18, 20, 22 und 24 jedes Sensormoduls 10, 12, 14 und 16 sind mit je einem Eingang 26, 28, 30 bzw. 32 eines Rechners verbunden. Dem Sensormodul 10 ist ein erster Rechner 34 zugeordnet. Dem Sensormodul 12 ist ein zweiter Rechner 36 zugeordnet. Dem Sensormodul 14 ist ein dritter Rechner 38 zugeordnet. Dem Sensormodul 16 ist ein vierter Rechner 40 zugeordnet. Der Deutlichkeit halber ist in Fig.1 jeweils nur die Verbindung des Ausgangs 22 jedes Sensormoduls mit dem Eingang 30 des zugehörigen Rechners dargestellt. Jeder Rechner 34, 36, 38 und 40 bewirkt eine Signalverarbeitung der Sensorsignale so, daß ein auf ein flugzeugfestes Bezugssystem bezogener Drehgeschwindigkeitsvektor $\omega^F$ und ein ebenfalls auf ein flugzeugfestes Bezugssystem bezogener Beschleunigungsvektor $a^F$ erhalten wird.

Diese Signalverarbeitung erfolgt einmal mittels eines Hauptprogrammes, das mit N bezeichnet ist, und eines Überwachungsprogrammes, das mit M bezeichnet ist. Das ist die Software der Rechner. In einem bestimmten Rechentakt "n", also in einem Zeitpunkt nT, wenn T die Taktperiode ist, verarbeiten die beiden Programme des ersten Rechners 34 die Eingangsdaten, die sich durch die Abtastung und Digitalisierung der Sensorsignale im Zeitpunkt nT, also im Abtasttakt "n" ergeben. Das ist in Fig.1 dadurch symbolisiert, daß die Programme mit dem Index n gekennzeichnet sind. Die Programme sind also als $N_n$ und $M_n$ bezeichnet. Mit 42 ist in Fig.1 der Verlauf eines Sensorsignals bezeichnet. Dieses Sensorsignal ist analog und wird von allen Sensormodulen 10, 12, 14 und 16 an dem Ausgang 22 geliefert. Für den ersten Rechner 34 werden als Eingangsdaten die Sensorsignale in dem Abtasttakt "n" verarbeitet, der mit dem Rechentakt zusammenfällt. Das ist in Fig.1 bei 44 angedeutet.

Der zweite Rechner 36 arbeitet mit den gleichen Programmen N und M. In dem zweiten Rechner 36 werden jedoch im Rechentakt "n" die Sensorsignale verarbeitet, die einen Takt vorher abgetastet und digitalisiert wurden. Das ist in Fig.1 bei 46 dargestellt: Das im Rechentakt "n" verarbeitete Sensorsignal wird im Abtasttakt "n-1" abgetastet. Diese Art der Signalverarbeitung ist dadurch symbolisiert, daß die Programme für den Rechner 36 mit $N_{n-1}$ und $M_{n-1}$ bezeichnet sind. Der zweite Rechner liefert ebenfalls Ausgangsdaten $\omega^F$ und $a^F$. Diese Ausgangsdaten entsprechen zwar dem Zustand zum Zeitpunkt (n-1)T, also vor einer Taktperiode T. Das stört aber wegen der hohen Taktfrequenz in der Praxis nicht.

5

In entsprechender Weise arbeitet der dritte Rechner 38 ebenfalls mit den Programmen N und M. In dem dritten Rechner werden im Rechentakt "n" die Sensorsignale verarbeitet, die zwei Takte vorher abgetastet und digitalisiert wurden. Das ist in Fig.1 bei 48 dargestellt. Das im Rechentakt "n" verarbeitete Sensorsignal wird im Abtasttakt "n-2" abgetastet. Diese Art der Signalverarbeitung ist wieder dadurch symbolisiert, daß die Programme für den Rechner 38 mit $N_{n-2}$ und $M_{n-2}$ bezeichnet sind. Auch der dritte Rechner 38 liefert Ausgangsdaten $\underline{\omega}^F$ und $\underline{a}^F$. Diese Ausgangsdaten entsprechen dem Zustand zum Zeitpunkt (n-2)T, also vor zwei Taktperioden. Auch diese Verzögerung stört noch nicht.

Der vierte Rechner 40 arbeitet mit den Programmen N und M In dem dritten Rechner 40 werden im Rechentakt "n" die Sensorsignale verarbeitet, die drei Takte vorher abgetastet und digitalisiert wurden. Das ist in Fig.1 bei 50 dargestellt. Das im Rechentakt "n" verarbeitete Sensorsignal wird im Abtasttakt "n-3" abgetastet. Diese Art der Signalverarbeitung ist wieder dadurch symbolisiert, daß die Programme für den Rechner 40 mit $N_{n-3}$ und $M_{n-3}$ bezeichnet sind. Auch der vierte Rechner 40 liefert Ausgangsdaten $\underline{\omega}^F$ und $\underline{a}^F$. Diese Ausgangsdaten entsprechen dem Zustand zum Zeitpunkt (n-3)T, also vor drei Taktperioden. Auch diese Verzögerung stört noch nicht.

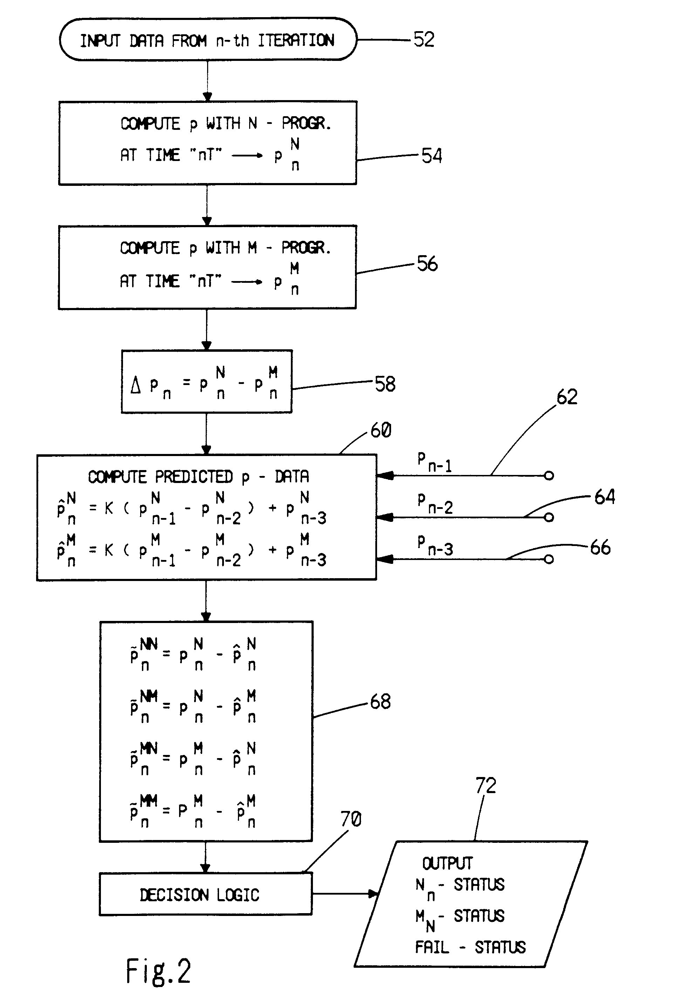

Fig.2 veranschaulicht die Funktion der Auswerterschaltung anhand einer Größe "p", die eine Komponente des Winkelgeschwindigkeits-Vektors $\underline{\omega}^F$ darstellt. Diese Komponente ist eine der Ausgangsdaten der Rechner 34, 36, 38 und 40. Die Indizes $\overline{n}$, n-1, n-2 und n-3 kennzeichnen die bei der Berechnung der Ausgangsdaten benutzten Sensorsignale. Der Index "n-2" besagt somit, daß bei der Berechnung des so gekennzeichneten Wertes von p die Sensorsignale zum Zeitpunkt (n-2)T, also zwei Takte vor dem Rechentakt benutzt worden sind. Der hochgestellte Index bezeichnet das Programm, mittels dessen die Berechnung des betreffenden Wertes von p erfolgt. So bezeichnet $p_{n-1}{}^M$ den Wert von p, der mittels des Überwachungsprogramms M aufgrund der einen Takt vor dem Rechentakt abgetasteten Sensorsignale berechnet wird.

Der erste Rechner 34 dient nur der Überwachung der Programme in der noch zu beschreibenden Weise. Die weiteren Rechner, nämlich der zweite Rechner 36, der dritte Rechner 38 und der vierte Rechner 40 liefern die Ausgangsdaten für eine Flugregelung. Wenn der erste Rechner mit Hauptprogramm N und Überwachungsprogramm M einwandfrei arbeitet, dann arbeiten auch die weiteren Rechner 36, 38 und 40 mit diesen Programmen einwandfrei. Diese arbeiten ja mit Sätzen von Eingangsdaten, dieschon in den vorangegangenen Rechentakten n-3, n-2 und n-1 an dem ersten Rechner 34 angelegen haben und (zunächst einmal unterstellt) einwandfrei verarbeitet worden sind. Die in Fig.2 dargestellte Auswerlogik prüft daher das einwandfreie Arbeiten des Rechners 34 mit den beiden Programmen $N_n$ und $M_n$, also mit den aktuellsten, im Abtasttakt n synchron mit dem Rechentakt abgetasteten Sensorsignalen.

Aus den Ausgangsdaten der drei weiteren Rechner 36, 38 und 40 kann durch polynomische Extrapolation ein Voraussagewert für die Ausgangsdaten im n-ten Rechentakt gebildet werden. Ein Voraussagewert kann auch durch adaptive Kalman-Voraussage gewonnen werden. Diese Voraussagewerte werden beispielsweise auf den Flugregler aufgeschaltet.

Zur Prüfung der Software werden auf den ersten Rechner 34 zunächst die im n-ten Abtasttakt abgetasteten Werte der Sensorsignale in den Rechner 34 eingegeben. Das ist in Fig.2 durch das Oval 52 dargestellt. Aus diesen Daten berechnet der Rechner 32 gemäß Block 54 die Ausgangsdaten mit dem Hauptprogramm $N_n$ zum Zeitpunkt "nT". Für die Komponente p des Winkelgeschwindigkeits-Vektors ergibt das einen Wert von $p_n{}^N$. Ebenso berechnet der Rechner 34 gemäß Block 56 aus den Sensorsignalen im Zeitpunkt nT den Wert der Komponente p des Winkelgeschwindigkeits-Vektors mit dem Überwachungsprogramm $M_n$. Das ergibt den Wert $p_n{}^M$.

Es wird die Differenz $\Delta P_n$ der beiden mit dem Hauptprogramm und mit dem Überwachungsprogramm berechneten Werte

$$( 1 ) \qquad \Delta p_n = p_n{}^N - p_n{}^M$$

gebildet. Das ist durch Block 58 dargestellt. Weiterhin werden Voraussagewerte für die Größe p berechnet nach den Beziehungen:

$$(2) \qquad \widehat{p}_n{}^N = K(p_{n-1}{}^N - p_{n-2}{}^N) + p_{n-3}{}^N$$

$$(3) \qquad \widehat{p}_n{}^M = K(p_{n-1}{}^M - p_{n-2}{}^M) + p_{n-3}{}^M$$

Darin ist K eine Konstante. Die Gleichungen (2) und (3) entsprechen einer polinomischen Extrapolation.

Stattdessen kann auch eine adaptive Kalman-Voraussage angewandt werden. Diese Voraussagewerte dienen als Vergleichswerte für die bei dem Rechentakt tatsächlich berechneten Ausgangswerte des Rechners 34. Der Gedanke dabei ist, daß physikalische Größen der hier vorliegenden Art sich nicht sprunghaft ändern. Aus den Ausgangsdaten des Rechners 34 für die Rechentakte n-3, n-2 und n-1 kann daher zumindest näherungsweise angegeben werden, welche Ausgangsdaten des Rechners 34 bei dem Rechentakt zu erwarten sind. Weichen die Ausgangsdaten bei einem Programm wesentlich von dem Voraussagewert ab, dann ist ein Fehler des Programms anzunehmen.

Die Bildung der Vorausssagewerte ist in Fig.2 durch Block 60 dargestellt. Die hierfür benötigten Werte $p_{n-1}$, $p_{n-2}$ und $p_{n-3}$ sind durch den ersten Rechner 34 in den vorhergehenden Rechentakten berechnet und gespeichert worden. Das ist in Fig.2 durch die Eingänge 62,64 und 66 zu dem Block 60 dargestellt.

Der nächste Schritt in der Fehlerlogik besteht in dem Vergleich der mit dem Hauptprogramm N oder dem Überwachungsprogramm berechneten Ausgangswerte $p_n^N$ und $p_n^M$ mit den beiden nach Gleichung (2) und Gleichung (3) gebildeten Voraussagewerten $p_n^N$ und $p_n^M$, die jeweils mit den durch das Hauptprogramm N bzw. den durch das Überwachungsprogramm in den Rechentakten n-1, n-1 und n-3 berechneten Ausgangsdaten gebildet sind. Es werden also folgende Differenzen gebildet:

$$(4) \qquad \tilde{p}_n^{NN} = p_n^N - \hat{p}_n^N$$

$$(5) \qquad \tilde{p}_n^{NM} = p_n^N - \hat{p}_n^M$$

$$(6) \qquad \tilde{p}_n^{MN} = p_n^M - \hat{p}_n^N$$

$$(7) \qquad \tilde{p}_n^{MM} = p_n^M - \hat{p}_n^M$$

Das ist durch Block 68 dargestellt. Die gemäß Block 58 gebildete Differenz $\Delta p_n$ und die Differenzen gemäß Gleichungen (4) bis (7) und Block 68 beaufschlagen eine Entscheidungslogik 70. Die Entscheidungslogik 70 liefert als Ausgänge den Status des Hauptprogrammes N im n-ten Rechentakt ($N_n$), den Status des Überwachungsprogramms M im n-ten Rechentakt ($M_n$) sowie ein Fehlersignal. Das ist in Fig.2 durch das Parallelogramm 72 dargestellt.

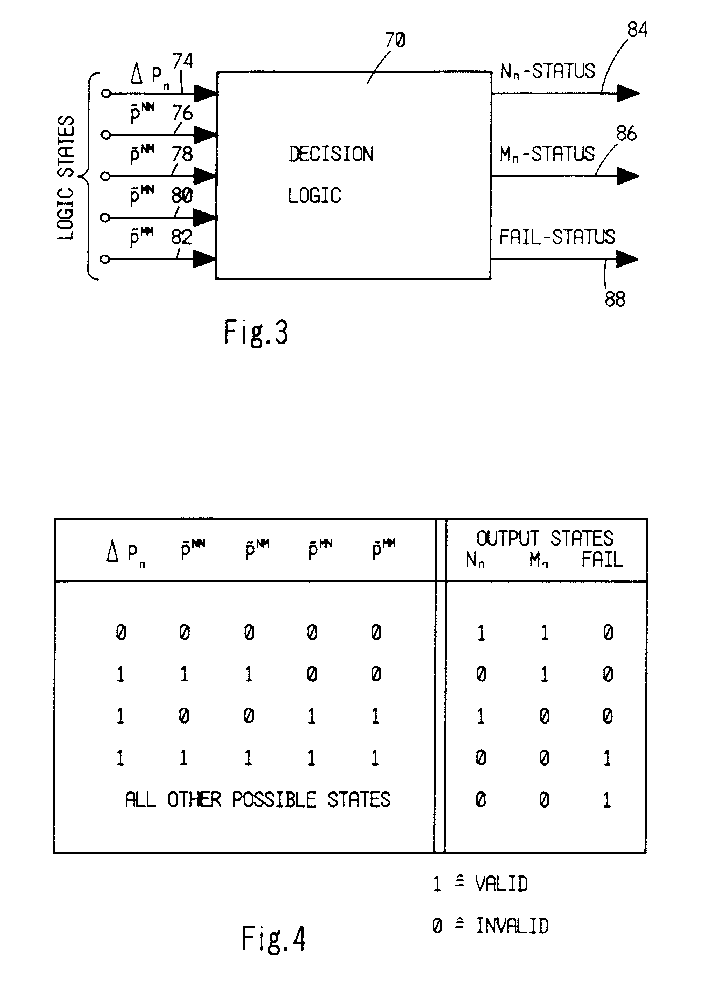

Die Entscheidungslogik 70 ist in Fig.3 noch einmal gesondert dargestellt. Die Entscheidungslogik 70 erhält die Differenzen gemäß den Gleichungen (1) und (4) bis (7) an "Eingängen" 74, 76, 78, 80 und 82. Die Entscheidungslogik 70 liefert an einem "Ausgang" 84 den Status des Hauptprogrammes, an einem Ausgang 86 den Status des Überwachungsprogrammes und an einem Ausgang 88 ein Fehlersignal. Der Status des Hauptprogrammes $N_n$ oder der Status des Überwachungsprogrammes $M_n$ gibt an, ob das Haupt- bzw. Überwachungsprogramm im n-ten Rechenschritt funktioniert. Das wird angenommen, wenn beide Programme das gleiche Ergebnis liefern und jedes Ergebnis mit den beiden Voraussagewerten übereinstimmt.

In Fig.4 ist die Wahrheitstabelle der Entscheidungslogik dargestellt. Bei den Eingangszuständen bedeutet "0", daß die betreffende Differenz nicht auftritt. Durch "1" ist angezeigt, daß eine Differenz, also eine Abweichung der betreffenden berechneten Ausgangsdaten auftritt. Bei den Ausgangszuständen der Entscheidungslogik 70 bedeutet eine "1" für ein Programm die einwandfreie Funktion, für das Störsignal das Auftreten eines Störsignals.

Wenn $\Delta p_n = 0$ ist, also die mit den beiden Programmen erhaltenen Ergebnisse übereinstimmen, und wenn diese Ergebnisse auch mit allen Voraussagewerten übereinstimmen, dann sind beide Programme $N_n$ und $M_n$ beim n-ten Rechentakt funktionsfähig. Es tritt kein Fehlersignal auf. Ist dagegen ein $\Delta p_n$ vorhanden, dann kann entweder das Hauptprogramm oder das Überwachungsprogramm einen Fehler zeigen. Welches Programm den Fehler zeigt, ergibt sich aus dem Vergleich mit den Voraussagewerten.

In der zweiten Zeile von Fig.4 ist die erste Spalte "1", d.h. die Ausgangsdaten des Hauptprogramms und des Überwachungsprogramms weichen voneinander ab (Gleichung (1)). Es ist nun zu entscheiden, welches der beiden Programme den Fehler zeigt. Es zeigt sich, daß $p_n^N$, der mit dem Hauptprogramm berechnete Wert von p, sowohl von dem mittels des Hauptprogrammes gebildeten Voraussagewert als auch von dem mittels des Überwachungsprogrammes gebildeten Voraussagewert abweicht, während solche Abweichungen bei dem mittels des Überwachungsprogrammes berechneten Wert von p nicht auftreten. Es ist daraus zu schließen, daß bei dem n-ten Rechentakt mit den dann anliegenden Sensordaten ein Fehler im

Hauptprogramm $N_n$ aufgetreten ist. Der Ausgangszustand der der Entscheidungslogik 70 am Ausgang 84 ($N_n$-Status) ist logisch "0", der Ausgangszustand am Ausgang 86 ($M_n$-Status) ist logisch "1". Ein Fehlersignal am Ausgang 88 braucht noch nicht gegeben werden, da die Rechner mit einem einzigen Programm weiterarbeiten können.

In der dritten Zeile der Wahrheitstabelle sind die Rollen von Haupt- und Überwachungsprogramm vertauscht.

In der vierten Zeile der Wahrheitstabelle sind alle Eingangszustände an den Eingängen 74 bis 82 im Zustand logisch "1". Zwischen allen Ausgangsdaten $p^N$ und $p_n{}^M$ allen Voraussagewerten sowie zwischen den Ausgangsdaten selbst treten Abweichungen auf. In diesem Fall tritt bei beiden Programmen im n-ten Rechenschritt ein Fehler auf. An beiden Ausgängen 84 und 86 erscheint der Zustand logisch "0". An dem Ausgang 88 erscheint ein Zustand logisch "1", also ein Fehlersignal. Das gleiche geschieht bei allen anderen denkbaren Eingangszuständen.

Wenn ein Softwarefehler in nur einem der Programme auftritt, der in der beschriebenen Weise erkannt und lokalisiert wird, werden alle weiteren Rechner 36, 38 und 40, welche dreifach redundant die Steuersignale für den Flugregler liefern, auf das jeweils andere Programm umgeschaltet. Das System ist dann noch voll funktionsfähig.

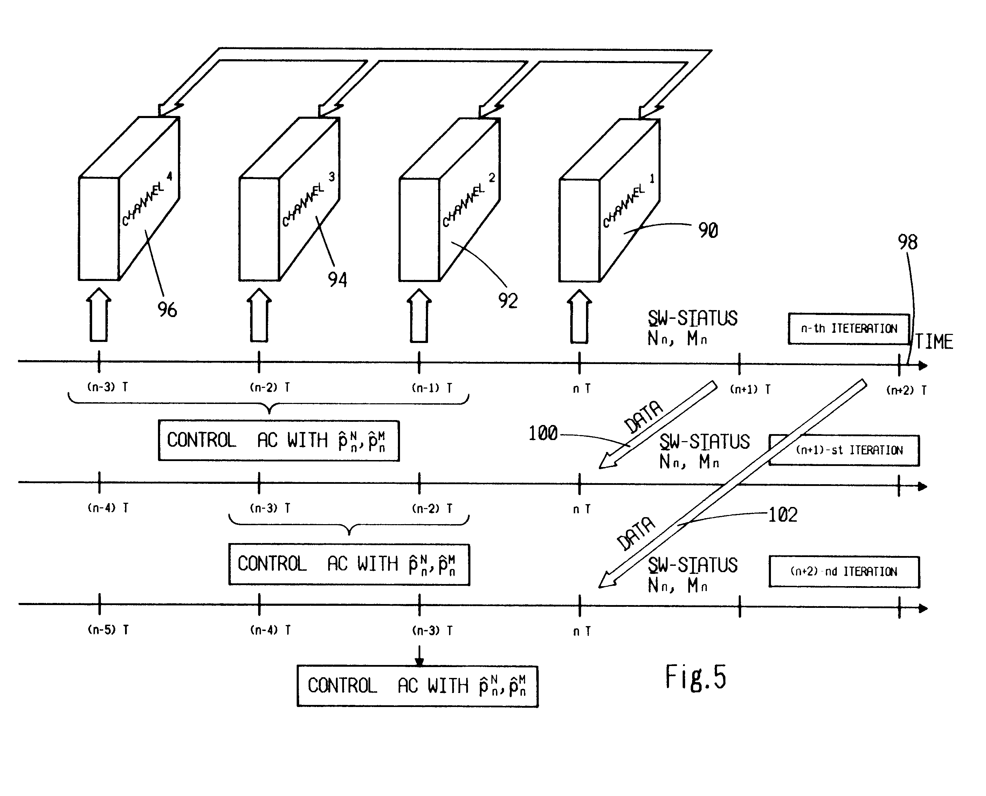

Wenn beide Programme gleichzeitig ausfallen und dementsprechend ein Fehlersignal am Ausgang 88 erscheint, dann erfolgt eine Rekonfiguration, wie sie in Fig.5 dargestellt ist.

In Fig.5 sind die vier Kanäle mit je einem Sensormodul und einem Rechner mit 90, 92, 94 und 96 bezeichnet. Unter den Kanälen ist eine Zeitachse 98 dargestellt mit den diskreten Zeitpunkten (n-3)T, (n-2)-T, (n-1)T, nT, (n+1)T, (n+2)T usw. Jeder Kanal 90 bis 96 verarbeitet im n-ten Rechentakt die Sensorsignale von einem Zeitpunkt, der unter dem betreffenden Kanal auf der Zeitachse 98 markiert ist. Man kann sich vorstellen, daß im normalen Betrieb die Zeitachse 98 sich von rechts nach links unter den Kanälen 90, 92, 94 und 96 herbewegt. Beim (n+1)-ten Rechentakt ist der Punkt (n+1)T unter dem Kanal 90. Der Rechner im Kanal 90 verarbeitet im (n+1)-ten Rechentakt die Sensorsignale, die synchron damit im (n+1)-ten Abtasttakt, also auch im Zeitpunkt (n+1)T, abgetastet werden. Der Rechner im zweiten Kanal 92 verarbeitet im (n+1)-ten Rechentakt die Sensorsignale vom n-ten Abtasttakt, die vorher von dem ersten Kanal 90 verarbeitet worden waren, usw. Daran ändert sich nichts, wenn ein einziges Programm einen Softwarefehler zeigt. Dann erfolgt die Signalverarbeitung in der gleichen Weise mit dem verbleibenden Programm.

Wenn aber beide Programme einen Softwarefehler im n-ten Rechentakt, also zum Zeitpunkt nT, zeigen, dann wird im nächsten, (n+1)-ten Rechentakt, also im Zeitpunkt (n+1)T so vorgegangen, wie es in der zweiten Zeile von Fig.5 dargestellt ist:

Während des n-ten Rechentaktes, in welchem die Fehler in der Software $N_n$ und $M_n$ festgestellt wird, ist die Software in den Kanälen 92, 94 und 96 noch funktionsfähig. Es kann daher aus den Ausgangsdaten der drei Rechner 36, 38 und 40 ein Voraussagewert gebildet werden, welcher den Wert $p_n$Noder $p_n$M gut annähert.

Im (n+1)-ten Rechentakt wird weiter mit dem Voraussagewert $\hat{p}_n{}^N$ oder $\hat{p}_n{}^M$ gearbeitet. Es wird davon ausgegangen, daß während des kurzen Taktintervalls T sich die "richtigen" Ausgangsdaten noch nicht so stark geändert haben, daß dies nicht zulässig wäre. Während dieses Taktintervalls erhalten die Rechner 36, 38 und 40 keine neuen Sensorsignale. Sonst würden die Rechner 36, 38 und 40 nämlich nach und nach alle den kritischen Datensatz erhalten, der zu dem Softwarefehler des ersten Rechners 34 führte. Dagegen erhält der erste Rechner 34 die Sensorsignale aus dem (n+1)-ten Abtasttakt, also vom Zeitpunkt (n+1)T. Das ist durch den Pfeil 100 in Fig.5 dargestellt. Es kann geschehen, daß der erste Rechner 34 dann wieder normal zu arbeiten beginnt. Der kritische Datensatz liegt ja dann nicht mehr an dem Rechner 34 an. Das wird von der Fehlerlogik von Fig.2 bis 4 festgestellt. Die vier Kanäle 90, 92, 94 und 96 werden dann für den nächsten Rechentakt wieder auf ihren normalen Betrieb umgeschaltet. Bleibt der Rechner 34 jedoch weiter in seinem fehlerhaften Zustand, dann wird im nächsten, dem (n+2)-ten Rechentakt weiterhin der zuletzt aus einwandfreien Ausgangsdaten berechnete Voraussagewert für die Flugregelung herangezogen. Der erste Rechner 34 erhält wieder die neuen Sensorsignale, die jetzt im Zeitpunkt (n+2)T abgetastet wurden. Das ist durch Pfeil 102 in Fig.5 angedeutet. Wieder wird mit der Fehlerlogik geprüft, ob die Programme N und/oder M mit den neuen Datensätzen wieder einwandfrei arbeiten. Das kann geschehen. Wenn das geschieht, erfolgt beim nächsten Rechentakt wieder die Umschaltung auf normalen Betrieb. Stellt sich aber nach dieser Zeitspanne (oder einer für die jeweilige Anwendung zulässigen Zeit) eine einwandfreie Funktion der Software nicht wieder ein, dann muß die Funktionsunfähigkeit der Einrichtung signalisiert werden.

Die beschriebene Einrichtung kommt mit zwei Programmen aus. Diese Programme brauchen nicht notwendig von verschiedenen Programmierern in unterschiedlichen Programmiersprachen geschrieben zu werden, da hier nicht eine "räumliche" Redundanz mit verschiedenen unterschiedlich programmierten Rechnern benutzt wird sondern eine "zeitliche" Redundanz. Es wird unterstellt, daß latente, nur bei bestimmten Konstellationen von Eingangsdaten auftretende Programmfehler nicht sowohl im Rechentakt n als auch in den Rechentakten (n-3), (n-2) und (n-1) auftreten werden, daß andererseits die Änderungen der physikalischen Größen nicht so schnell geschieht, daß nicht statt mit der Größe aus dem Rechentakt (n-1) statt der Größe aus dem Rechentakt n gearbeitet werden könnte.

**Patentansprüche**

1. Einrichtung zur Erzeugung von Meßsignalen mit einer Mehrzahl von redundant vorgesehenen Sensoren, deren Sensorsignale in einem vorgegebenen Takt abgetastet und digitalisiert und durch ebenfalls redundant vorgesehene Rechner mit mehrfach vorgesehener Software digital verarbeitet werden, **dadurch gekennzeichnet, daß**

   (a) jeder der Rechner (34,36,38,40) die Sensorsignale mit einem Hauptprogramm (N) und parallel dazu mit einem von dem Hauptprogramm (N) verschiedenen Überwachungsprogramm (M) verarbeitet,

   (b) ein erster Rechner (34) eingerichtet ist, in jedem Rechentakt (n) Sensorsignale zu verarbeiten, die in einem vorgegebenen Abtasttakt (n) bezogen auf den Rechentakt (n) abgetastet werden,

   (c) weitere Rechner (36,38,40) vorgesehen sind, die jeder in jedem Rechentakt (n) Sensorsignale verarbeiten, welche in Abtasttakten ((n-1),(n-2), (n-3)) abgetastet wurden, die gegenüber dem besagten vorgegebenen Abtasttakt (n) unterschiedliche Nacheilungen aufweisen, und

   (d) eine Fehlerlogik (Fig.2) zur Entscheidungsfindung über Programmfehler aus den mit dem Hauptprogramm (N) und dem Überwachungsprogramm (M) in den verschiedenen Rechnentakten erhaltenen Ergebnissen vorgesehen ist.

2. Einrichtung nach Anspruch 1, **dadurch gekennzeichnet, daß** die Fehlerlogik
   - die Differenz ($\Delta p_n$) der Ergebnisse aus der Verararbeitung der von dem ersten Rechner (34) mit dem Hauptprogramm (N) und mit dem Überwachungsprogramm (M) erhaltenen Ausgangsdaten ($p_n^N ; p_n^M$) bildet und, bei Auftreten einer signifikanten Differenz,
   - die mit dem Hauptprogramm (N) und dem Überwachungsprogramm (M) durch den ersten Rechner (34) erhaltenen Ausgangsdaten mit Vorhersagewerten ($\hat{p}_n^N, \hat{p}_n^M$) vergleicht, die aus den in den nacheilenden Rechentakten ((n-1),(n-2),(n-3)) mit dem Hauptprogramm (N) und dem Überwachungsprogramm (M) erhaltenen Ausgangsdaten gebildet werden.

3. Einrichtung nach Anspruch 1, **dadurch gekennzeichnet, daß** vier Rechner (34,36,38,40) vorgesehen sind, von denen der erste Rechner (34) Sensorsignale von dem vorgegebenen Abtasttakt (n) verarbeitet, der zweite Rechner (36) Sensorsignale von dem ersten davorliegenden Abtastakt (n-1), der dritte Rechner (38) Sensorsignal von dem zweiten davorliegenden Abtasttakt (n-2) und der vierte Rechner (40) Sensorsignale von dem dritten davorliegenden Abtasttakt (n-3).

4. Einrichtung nach einem der Ansprüche 1 bis 3, **dadurch gekennzeichnet, daß** ein von den Sensorsignalen abhängiges Steuersignal, das auf nachgeschaltete Bauteile aufgeschaltet ist, aus den Ausgangsdaten der besagten weiteren Rechner (36,38,40) gebildet wird.

5. Einrichtung nach Anspruch 3 oder 4, **dadurch gekennzeichnet, daß**

   (a) der erste Rechner (34) aus den in dem vorgegebenen Abtasttakt (n) abgetasteten Sensorsignalen erste Ausgangsdaten ($p_n^N$) mit dem Hauptprogramm (N) liefert,

   (b) der erste Rechner (34) aus den in dem vorgegebenen Abtasttakt (n) abgetasteten Sensorsignalen zweite Ausgangsdaten ($p_n^M$)mit dem Überwachungsprogramm (M) liefert,

   (c) eine Fehlerlogik die Differenz ($\Delta p_n$) der ersten und der zweiten Ausgangsdaten bildet und

   (d) bei einer signifikanten Abweichung der ersten und der zweiten Ausgangsdaten Rechnermittel (60) zur Berechnung von Voraussagewerten ($\hat{p}_n^N, \hat{p}_n^M$) und eine auf die Abweichung der Ergebnisse von den Voraussagewerten ansprechende Fehlerlogik (68,70) aktiviert.

6. Einrichtung nach Anspruch 5, **dadurch gekennzeichnet, daß** die Rechnermittel (60) zur Berechnung von Voraussagewerten

   (a) die in den voreilenden Rechentakten ((n-3),(n-2), (n-1)) erhaltenen Ausgangsdaten ($p_{n-3}, p_{n-2}, p_{n-1}$) erhalten und

   (b) daraus Voraussagewerte nach den Beziehungen

   (2) $\qquad p_n^N = K (p_{n-1}^N - p_{n-2}^N) + p_{n-3}^N$

(3)     $p_n^M = K(p_{n-1}^M - p_{n-s}^M) + p_{n-e}^M$

erzeugen, wobei "p" Ausgangsdaten der Signalverarbeitung bezeichnen, der obere Index das bei der Bildung des Ergebnisses benutzte Programm (N = Hauptprogramm,M = Überwachungsprogramm) und der untere Index die laufende Zahl des Abtasttaktes bezeichnet, in welchem die zur Bildung der Ausgangsdaten benutzte Sensorsignal abgetastet wurde.

**7.** Einrichtung nach Anspruch 6, **dadurch gekennzeichnet, daß** die Fehlerlogik

(a) Mittel (68) zur Bildung aller möglichen Differenzen von Ausgangsdaten des ersten Rechners (34) und Voraussagewerten enthalten sowie

(b) eine Entscheidungslogik (70) enthält, auf welche die Differenz der beiden von dem ersten Rechner (34) mittels des Hauptprogramms (N) und des Überwachungsprogramms (M) gelieferten Ausgangsdaten sowie die Differenz dieser Ausgangsdaten mit jedem der Voraussagewerte aufgeschaltet sind und welche aus den Differenzen den Status der Programme feststellt.

**8.** Einrichtung nach Anspruch 7, **dadurch gekennzeichnet, daß** die Entscheidungslogik folgende Wahrheitstabelle liefert:

| $\Delta\, p_N$ | $\tilde{p}^{NN}$ | $\tilde{p}^{NM}$ | $\tilde{p}^{MN}$ | $\tilde{p}^{MM}$ | $N_n$ | $M_n$ | Fehler |
|---|---|---|---|---|---|---|---|
| | | | | | **Ausgangszustände** | | |
| 0 | 0 | 0 | 0 | 0 | 1 | 1 | 0 |
| 1 | 1 | 1 | 0 | 0 | 0 | 1 | 0 |
| 1 | 0 | 0 | 1 | 1 | 1 | 0 | 0 |
| 1 | 1 | 1 | 1 | 1 | 0 | 0 | 1 |
| alle anderen möglichen Zustände | | | | | 0 | 0 | 1 |

1 $\mathrel{\hat{=}}$ VALID

0 $\mathrel{\hat{=}}$ INVALID

**9.** Einrichtung nach einem der Ansprüche 3 bis 8, **dadurch gekennzeichnet, daß** Rekonfigurationsmittel vorgesehen sind, durch welche

- der erste Rechner (34) bei einem Fehler des Hauptprogrammes (N) oder des Überwachungsprogrammes (M) zur Weiterarbeit mit dem jeweils anderen Programm ansteuerbar ist,
- bei gleichzeitigem Ausfall des Hauptprogrammes (N) und des Überwachungsprogrammes (M) während einer Mehrzahl von Rechentakten die Eingabe neuer Daten in die weiteren Rechner (36,38,40) unterbrochen wird,
- die während des letzten Rechentaktes (n-1) vor dem Ausfall bestimmten Voraussagewerte auf einen Ausgang aufschaltbar sind,
- die weiter abgetasteten digitalisierten Sensorsignale weiter auf den ersten Rechner (34) aufschaltbar sind, und
- eine Fehlermeldung erfolgt, wenn nach einer vorgegebenen Anzahl von Rechen- und Abtasttakten die mit dem Hauptprogramm (N) und dem Überwachungsprogramm (M) erhaltenen Ausgangsdaten des ersten Rechners (34) nicht wieder miteinander und mit den Voraussagewerten übereinstimmen.

Fig.1

INPUT DATA FROM n-th ITERATION — 52

COMPUTE p WITH N - PROGR.
AT TIME "nT" $\longrightarrow$ $p_n^N$ — 54

COMPUTE p WITH M - PROGR.
AT TIME "nT" $\longrightarrow$ $p_n^M$ — 56

$\Delta p_n = p_n^N - p_n^M$ — 58

COMPUTE PREDICTED p - DATA
$\hat{p}_n^N = K ( p_{n-1}^N - p_{n-2}^N ) + p_{n-3}^N$
$\hat{p}_n^M = K ( p_{n-1}^M - p_{n-2}^M ) + p_{n-3}^M$
— 60

$p_{n-1}$ — 62
$p_{n-2}$ — 64
$p_{n-3}$ — 66

$\tilde{p}_n^{NN} = p_n^N - \hat{p}_n^N$

$\tilde{p}_n^{NM} = p_n^N - \hat{p}_n^M$

$\tilde{p}_n^{MN} = p_n^M - \hat{p}_n^N$

$\tilde{p}_n^{MM} = P_n^M - \hat{p}_n^M$
— 68

DECISION LOGIC — 70

OUTPUT
$N_n$ - STATUS
$M_N$ - STATUS
FAIL - STATUS
— 72

Fig.2

Fig.3

Fig.4

$1 \stackrel{\wedge}{=}$ VALID

$0 \stackrel{\wedge}{=}$ INVALID

Fig.5

CHANNEL 4    CHANNEL 3    CHANNEL 2    CHANNEL 1    90

96    94    92

SW-STATUS
$N_n$, $M_n$

n-th ITETERATION    98

$(n-3)$ T    $(n-2)$ T    $(n-1)$ T    n T    $(n+1)$ T    $(n+2)$ T    TIME

CONTROL AC WITH $\hat{p}_n^N$, $\hat{p}_n^M$

DATA    100

SW-STATUS
$N_n$, $M_n$    $(n+1)$-st ITERATION

$(n-4)$ T    $(n-3)$ T    $(n-2)$ T    n T

CONTROL AC WITH $\hat{p}_n^N$, $\hat{p}_n^M$

DATA    102

SW-STATUS
$N_n$, $M_n$    $(n+2)$-nd ITERATION

$(n-5)$ T    $(n-4)$ T    $(n-3)$ T    n T

CONTROL AC WITH $\hat{p}_n^N$, $\hat{p}_n^M$

EP 0 476 160 A1

Europäisches
Patentamt

EUROPÄISCHER
RECHERCHENBERICHT

Nummer der Anmeldung

EP 90 11 7820

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 186 965 (SPERRY CORP.)<br>* Auszug; Seite 5, Zeilen 5-26; Seite 6, Zeile 10 - Seite 7, Zeile 25; Seite 8, Zeilen 7-35; Seite 15, Zeile 18 - Seite 16, Zeile 32; Ansprüche 1-5 *<br>– – – | 1,5 | G 06 F 11/16<br>G 05 B 9/00 |
| A | IEEE 7TH DIGITAL AVIONICS SYSTEMS CONFERENCE, Fort Worth Texas, 13. - 16. Oktober 1986, Seiten 523-528, IEEE, New York, US; E.F. HITT: "Real-time fault tolerant software in distributed avionics systems architectures using digital data buses"<br>* Seite 523, Absatz: "Background"; Seite 526, Absatz: "Fault tolerant software in distributed avionics systems" *<br>– – – | 1,5 | |
| A | DE-A-3 302 223 (VEB KOMBINAT UMFORMTECHNIK "HERBERT WARNKE")<br>* Auszug; Anspruch; Seite 4, Zeilen 5-23 *<br>– – – | 1,3 | |
| A | EP-A-0 104 850 (FUJITSU)<br>* Auszug; Seite 3, Zeile 24 - Seite 4, Zeile 14 *<br>– – – | 1,3 | |
| A | IEEE VLSI AND COMPUTER PERIPHERALS PROCEE-DINGS, Hamburg, 8. - 12. Mai 1989, Seiten 3-136 - 3-143, IEEE, New York, US; P.M. FRANK: "Advanced fault diagno-sis techniques in aerospace systems"<br>* Insgesamt *<br>– – – – – | 2,5 | RECHERCHIERTE SACHGEBIETE (Int. Cl.5)<br><br>G 06 F 11<br>G 05 B 9<br>G 05 D 1 |

Der vorliegende Recherchenbericht wurde für alle Patentansprüche erstellt

| Recherchenort | Abschlußdatum der Recherche | Prüfer |
|---|---|---|
| Den Haag | 10 Mai 91 | SARASUA GARCIA L. |